# EUROPEAN PATENT APPLICATION

(11) **EP 3 075 460 A1**
(43) Date of publication of application: **05.10.2016**
(21) Application number: 16160804.7
(22) Date of filing: 17.03.2016
(51) Int. Cl.: B08B 9/093, B01F 15/00, F16K 15/02

(54) **FLUID EJECTION APPARATUS**

(30) Priority: 30.03.2015 EP 15161616
(71) Applicant: Alfa Laval Corporate AB, 221 00 Lund (SE)
(72) Inventor: MORGAN, Chad, Exton, PA Pennsylvania 19341 (US); STEWART, George, Ridley Park, PA Pennsylvania 19078 (US); DELANEY, Andrew, West Chester, PA Pennsylvania 19380 (US)
(74) Representative: Alfa Laval Attorneys

(57) **Abstract**

The invention provides a fluid ejection apparatus (20) configured for being mounted to a mixing tank (10) in a position to eject a pressurized fluid (B) to impinge the lower surface of a mixing agitator (14). The apparatus (20) has a rod (34) mounted for linear movement within in a body (44), a closing element (30) being affixed to an end of the rod (34). A spring (40) is mounted to the body (44) within a lower section (50) for biasing the rod (34) and the closing element (30) toward a closed position (P1). An upper section (24) is mounted to the body (44) for discharging the pressurized fluid (B) through an array of outlet channels (26).

## Description

### TECHNICAL FIELD

The present invention relates to the field of equipment for cleaning the interior of tanks, and more particularly to a fluid ejection apparatus for cleaning a mixing device located in a tank.

### BACKGROUND

Many liquid products are a manufactured blend, or mixture, of several components. The components may each be a liquid or a powder, provided a major portion of the mixture is comprised of a liquid. Whether all of the ingredients are liquid or some are liquid and some are a powder, thorough mixing is required to achieve a desired uniform mixture. The mixing is typically accomplished by use of a rotating agitator, e.g. a shaft mounted device having multiple blades.

The completed mixture frequently has a comparatively high viscosity, such as mayonnaise or toothpaste, thereby causing some residue of the mixture to adhere to the agitator blades as well as to the inside walls of the mixing tank. It is necessary to thoroughly clean the interior of the mixing tank prior to beginning a subsequent mixing batch in order to maintain mixture purity and uniformity. A tank may be subsequently used to produce a mixture that is different from the previous mixture, therefore making thorough tank cleaning especially necessary.

Tank cleaning apparatus, such as cleaning machinery sold by the present applicant under the trademark GAMAJET, are commercially available. These tank cleaning machines are lowered into a tank that requires cleaning through an access port subsequent to completing the mixing operation and draining most of the mixture. After draining, a relatively small amount of residue clings to the tank inside wall surface and to the shaft and blades of the agitator. The conventional tank cleaning machines are effective in cleaning residue from the tank inside wall surface, the mixer shaft, and the upwardly facing surfaces of the mixing blades. However, the downwardly facing surfaces of the mixing blades are not in the tank cleaning machine's spray pattern, and the clinging mixture residue sometimes remains on lower surfaces of the blades.

Prior designs for apparatus for assembly to a tank for cleaning the interior thereof include:
U.S. Published Patent Application No. 2011/0088732 to Savard for a Flexible Tank Cleaning Apparatus With Control Linkage. The Savard invention is for installation to a tank below the liquid fill line with the output end of the apparatus extending into the tank. A control linkage is connected to a flexible output end of the tubing for movement between a retracted position and an extended position, the linkage being able to change orientation in order to change the direction of fluid discharge.
U.S. Published Patent Application No. 2014/0124009 to Jensen is for a Pop-Up Nozzle, Cleaning Device And Method Of Operation. The Jensen patent application discloses a nozzle body to be connected to a tank, with a nozzle being contained within the nozzle body. The nozzle is able to be moved from a retracted position to an extended position. Apertures are exposed for discharging a fluid when the nozzle is in the extended position.
The present invention described below provides a particularly effective apparatus for cleaning objects within a mixing tank, especially the downwardly facing surfaces of a mixing agitator.

### SUMMARY

Disclosed herein is a fluid ejection apparatus adapted for mounting to a mixing tank having a mixing agitator positioned therein. The fluid ejection apparatus is formed with a housing having three sections that are connected to one another for enclosing a rod having a conical closing element at a first end thereof. The first housing section is formed with a conical cavity configured for receiving the closing element in sealing relation. A spring is mounted within the housing to bias the rod and closing element to a closed position. A pressurized fluid is connected to flow into the housing and force the closing element and the rod into an open position, allowing the fluid to be ejected to clean the mixing agitator.

### BRIEF DESCRIPTION OF THE DRAWINGS

The present invention is best understood in conjunction with the accompanying schematic drawing figures in which the elements are identified by similar reference numerals and wherein:
Figure 1 is an elevation cross sectional view of an industrial mixing tank with a fluid ejection apparatus according to the invention mounted thereto, the fluid ejection apparatus shown enlarged for clarity.
Figure 2 is a detailed cross sectional view of the fluid ejection apparatus with a rod and closure element in closed position.
Figure 3 is a detailed cross sectional view of the fluid ejection apparatus with the rod and closure element in open position.
Figure 4 is a cross sectional view of an upper section of the fluid ejection apparatus as indicated by line 4 - 4 of Figure 3.
Figure 5A is an exploded side elevation view of external portions of the fluid ejection apparatus.
Figure 5B is an exploded side elevation view of internal components of the fluid ejection apparatus.
Figure 6 is a detailed cross sectional view of another embodiment of a fluid ejection apparatus with a rod and closure element in closed position.
Figure 7 is a detailed cross sectional view of the fluid ejection apparatus of Figure 6, with the rod and closure element approaching an open position.
Figure 8 is a cross sectional view of an upper section of the fluid ejection apparatus of Figure 7, as seen along line A1 - A1.

### DETAILED DESCRIPTION

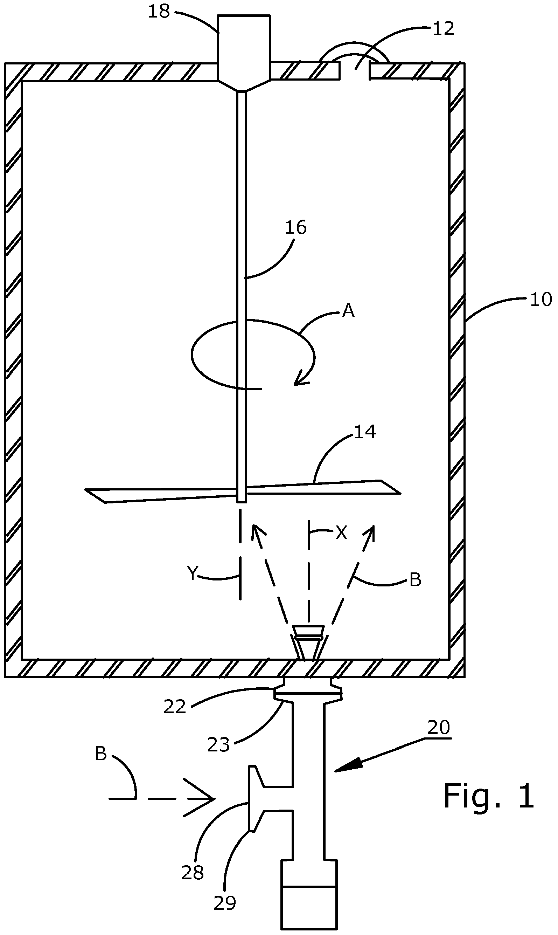

Referring to Figure 1, an industrial mixing tank 10 is illustrated in schematic side elevation cross sectional view. Tank 10 has an access port 12 through an upper wall thereof. In addition, a drive mechanism 18 is mounted to tank 10 with an agitator 14 connected to drive mechanism 18 by means of a shaft 16. Drive mechanism 18 is capable of causing agitator 14 to rotate, e.g. in the direction indicated by arrow A. Drive mechanism 18 may be an electric, pneumatic, or other type of rotary drive apparatus. Drive mechanism 18 may rotate agitator 14 in either a clockwise or counterclockwise rotational direction. A conventional tank cleaning machine (not shown) as noted above may be inserted into tank 10 through access port 12 for cleaning residue from the inside walls of tank 10 and the upwardly facing surfaces of agitator 14 after the mix batch has been drained.

Referring further to Figure 1, a fluid ejection apparatus 20 is shown mounted to a lower surface of tank 10. The tank 10 is provided with a tank flange 22, and the fluid ejection apparatus 20 is provided with a connector flange 23. When mounting the fluid ejection apparatus 20 to the tank 10, the connector flange 23 is brought into aligned contact with the tank flange 22 and the flanges 22, 23 are connected to one another, e.g. by a ring clamp (not shown). A fluid inlet 28 is formed into the fluid ejection apparatus 20 in order to conduct a pressurized fluid B, e.g. a cleaning fluid, into the fluid ejection apparatus 20. Means are provided for attaching a source of pressurized fluid to the fluid inlet 28, e.g. a connecting flange 29. Through an internal mechanism to be described below, fluid B is discharged from the fluid ejection apparatus 20 in an upwardly divergent conical spray pattern. It is particularly noted that a central axis X of fluid ejection apparatus 20 is located substantially parallel to, and laterally offset from, an axis Y of the agitator shaft 16, but still with the fluid ejection apparatus 20 positioned under the agitator 14. By this eccentric positioning of the fluid ejection apparatus 20 relative to the agitator shaft 16, ejected cleaning fluid B is able to impinge all portions of downwardly facing surfaces of the agitator 14.

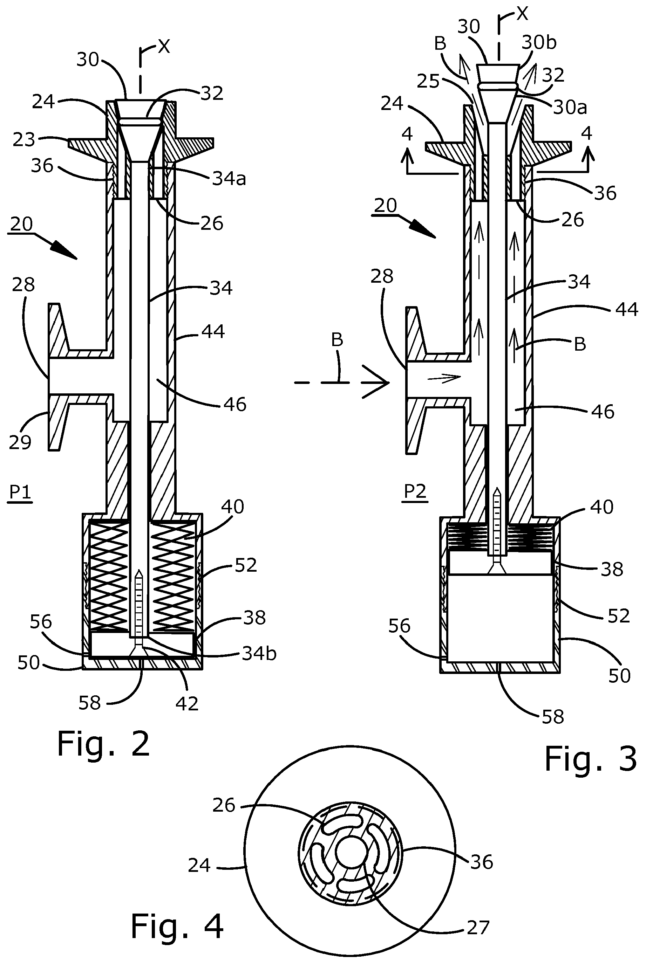

Referring now to Figure 2, the fluid ejection apparatus 20 is illustrated in enlarged cross sectional view as fully assembled in closed position P1 and before a pressurized fluid is introduced. For reasons of clarity, such mechanical details as liquid retention seals are not shown in the drawings but are assumed as an integral part of the apparatus design. The fluid ejection apparatus 20 has a substantially hollow, central housing section 44, also referred to as body 44, with an expanded chamber 46 formed therein. The inlet connection flange 29 is formed for connecting the apparatus 20 to a source of pressurized fluid. The fluid inlet 28 is adapted to conduct a pressurized fluid from a pressurized fluid source into the chamber 46. An upper housing section 24, also referred to as upper section 24 or upper cap 24, is assembled to the body 44 by threads 36 that are effective to contain a pressurized fluid and is able to be opened for periodic maintenance. A plurality of outlet channels 26 extend from the chamber 46 through the upper cap 24 in parallel relation to axis X. A lower housing section 50, also referred to as lower section 50 or lower cap 50, is connected to the body 44 by threads 52, similarly formed to threads 36 described above. The lower cap 50 encases a spring 40 therein. The upper cap 24, the body 44, and the lower cap 50 provide first (upper), second (central), and third (lower) sections 24, 44, 50 of a housing for the fluid ejection apparatus 20.

Referring further to Figure 2, a rod 34 is slidingly assembled within the body 44 in parallel relation along axis X. A closure element 30 is formed at a first end 34a of the rod 34. The closure element 30 is substantially conical in form. The closure element 30 may be formed integral with the rod 34 or as a separate component and assembled to the rod 34 by any appropriate fastening method. When the fluid ejection apparatus 20 is in the closed position P1 the closure element 30 engages an inner wall of the upper cap 24 in order to prevent the mixing batch in tank 10 (see Figure 1) from seeping into the chamber 46. A seal 32, e.g. an "O" ring, is provided around a central area of the closure element 30. A lower end 34b of the rod 34 extends through the chamber 46 and through the spring 40. A base member 38, which may be embodied as base plate 38, is assembled to the lower end 34b of the rod 34 by a fastener 42, e.g. a screw, or by some other suitable method. The spring 40 is a compression spring, such as a constant modulus compression spring, shown here in expanded condition with the rod 34 and the closure element 30 in the closed position P1.

Referring now to Figure 3, the fluid ejection apparatus 20 is illustrated in an open position P2 after pressurized fluid B has been introduced thereto. Pressurized fluid B is conducted through the inlet 28 to enter the chamber 46 within the body 44 to flow in parallel to axis X. Whereas the rod 34 passes snugly through a lower portion of the body 44, with sealing elements included as appropriate, the flow and pressure of pressurized fluid B are directed upwardly through the outlet channels 26 to force the closure element 30 and the rod 34 upwardly. As the closure element 30 is substantially conical in shape, upward movement of the closure element 30 creates a conical outlet 25 through which pressurized fluid B is discharged in an upwardly divergent conical flow pattern. Other flow patterns may be obtained by using other shapes for the closure element and the conical outlet. Due to the closure element 30 and the rod 34 being moved upwardly (as illustrated), the rod 34 and the base plate 38 force the spring 40 to be compressed. The constant modulus spring 40 may be calibrated to compress when the pressure of pressurized fluid B reaches a level of approximately twice the standard atmospheric pressure. The standard atmospheric pressure is about 101 kilopascal. Whereas small amounts of pressurized fluid B may seep downward along rod 34 and around any seals provided, one or more drain holes 56, 58 are provided through the lower cap 50 in order to minimize a possible back pressure within the lower cap 50. As will be understood, without drain holes 56, 58 fluid that might settle in the lower cap 50 would prevent the rod 34 from fully returning to the closed position P1 depicted in Figure 2 and therefore prevent the closure element 30 and the seal 32 from sealing against the wall of the outlet 25. Lack of a proper seal between the closure element 30, the seal 32 and the outlet 25 would potentially allow a liquid being mixed in tank 10 (see Figure 1) to enter fluid the ejection apparatus 20 and disturb proper operation thereof.

Referring now to Figure 4, a cross sectional view of the upper cap 24 as taken in the direction indicated by line 4 - 4 of Figure 3 is illustrated. External threads 36 are formed on a lower part of the upper cap 24 to engage mating threads within the body 44 (see Figures 2, 3. A central hole 27 is formed in the upper cap 24 to slidingly receive the rod 34 (see Figures 2, 3. A series of outlet channels 26 are formed in a circular array around the central hole 27. In the exemplified embodiment of the apparatus, the outlet channels 26 are formed arcuately. Whereas four outlet channels 26 are illustrated, other numbers of outlet channels 26 may be employed.

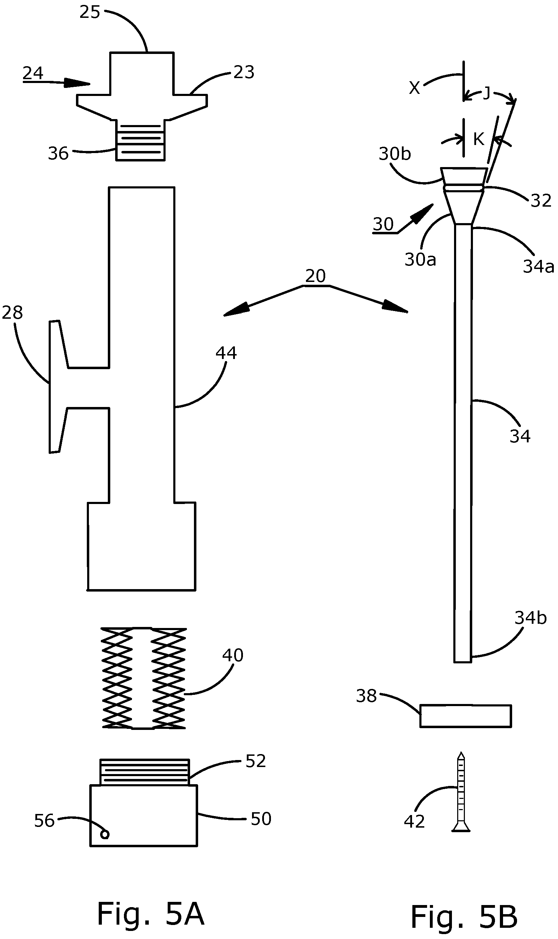

Referring now to Figures 5A and 5B, the fluid ejection apparatus 20 is shown in exploded elevation view. As best seen in Figure 5B, closure element 30 is formed as a compound cone with a lower portion 30a formed at an angle J to axis X and an upper portion 30b formed at another angle K to axis X. The angle J for the lower portion 30a is larger than the angle K for the upper portion 30b. The seal 32 is placed in a receiving circumferential groove between the lower portion 30a and the upper portion 30b. The angle K for the upper portion 30b is smaller than the angle J for the lower portion 30a.

When assembling the fluid ejection apparatus 20 the upper cap 24 is first threadingly mounted to the upper end of body 44. The lower end 34b of rod 34 is inserted through the upper cap 24 to pass longitudinally through the body 44. The spring 40 is placed over the lower end 34b of the rod 34 and the spring 40 is positioned into the lower end of the body 44. Next the base plate 38 is placed against the lower end 34b and affixed thereto by the fastener 42 or other means of attachment. At this stage of assembly, the closure element 30 is held in, or pulled against, the outlet 25 by the force of the spring 40 against the base plate 38. Finally, the lower cap 50 is threadingly mounted to the lower end of the body 44 to seal the fluid ejection apparatus 20. As noted above, sealing elements, e.g. "O" rings, are employed within the fluid ejection apparatus 20 as appropriate. Fluid ejection apparatus 20 is now in condition to be mounted by means of the connector flange 23 to a mixing tank (see Figure 1) with the inlet 28 being connected to a source of pressurized fluid, e.g. cleaning fluid.

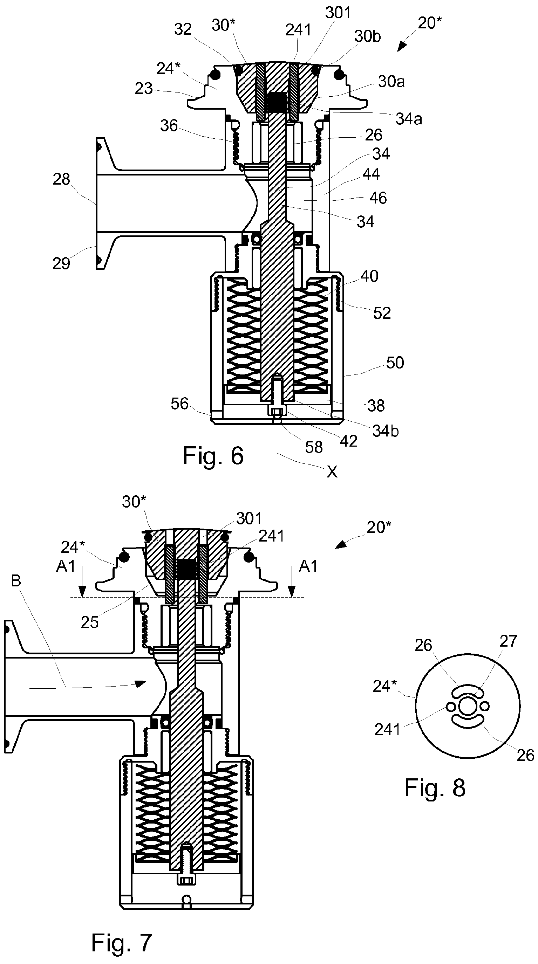

Referring to Figure 6, another embodiment of the fluid ejection apparatus 20* is illustrated. In this embodiment all features of the fluid ejection apparatus 20* are the same as for the fluid ejection apparatus 20 of Figure 2, apart from the closure element 30* and the upper housing section 24*, and operates in the same way. Features of the fluid ejection apparatus 20* of Figure 6 that are the same as features of the fluid ejection apparatus 20 of Figure 2 share the same reference numerals.

Specifically, the closure element 30* comprises a through hole 301 for allowing fluid to pass through the closure element 30* when the rod 34 is in the open position. In the illustrated embodiment there is a second, similar through hole in the closure element 30*. The second through hole in the closure element that is arranged opposite the first through hole 301, as seen relative the central axis X. The upper housing section 24* has a first plug 241 for the first through hole 301 and a second plug for the second though hole. The first plug 241 seals the first through hole 301 when the rod 34 is in the closed position, while the second plug seals the second though hole. When the rod 34 is in the closed position, the plugs 241 extend into the holes 301 and block the holes. When the valve rod 34 moves towards the open position, then the closure element 30* is lifted as shown in Figure 7, which the result the through holes are lifted off from the plugs. When the valve rod 34 is fully lifted then the through holes 301 are fully lifted off from the plugs 241 and their bottoms are exposed such that pressurized fluid B may flow into the through holes 301, through them and out from them such that small jet beam are formed. These jet beams have a direction that is parallel to central axis X.

Referring to Figure 8, a cross sectional view of the upper housing section 24* as seen in the direction indicated by line A1 - A1 of Figure 7 is illustrated. The central hole 27 is formed in the upper housing section 24* to slidingly receive the rod 34. A series of outlet channels 26 are formed around the central hole 27. The plugs 241 are arranged on a respective side of the central hole 27, between the outlet channels 26. When the valve rod 34 is in the fully open position, the pressurized fluid B flows from the chamber 46, through the channels 26, into the through holes 301 respectively around the closure element 30*, and out from the through holes 301 as straight beams respectively out from around the closure element 30* in form of a cone-shaped beam.

It is possible to arrange another number of through holes in the closure element, such as one, three or more holes. Each through hole is plugged with a corresponding plug when the rod 34 is in the closed position.

While the description above discloses a preferred embodiment of the fluid ejection apparatus, it is contemplated that numerous variations and modifications of the invention are possible and are considered to be within the scope of the claims that follow. Moreover, any type of tank agitator may be cleaned by the described fluid ejection apparatus 20, as long as the fluid ejection apparatus 20 is arranged so that the fluid impinges, either directly or indirectly, on the tank agitator.

## Claims

1. A fluid ejection apparatus (20) for cleaning a mixing device (14) that is located within a tank (10), the fluid ejection apparatus (20), comprising:
a body (44) enclosing a chamber (46);
an inlet (28) formed through the body (44), the inlet (28) being in fluid communication with the chamber (46);
a divergent outlet (25) formed from the body (44), the outlet (25) being in fluid communication with the chamber (46);
a rod (34) that is movable within the body (44) along an axis (X) of the body (44) between a closed position (P1) and an open position (P2);
a closure element (30) that is arranged at a first end (34a) of the rod (34) for sealing the outlet (25) when the rod (34) is in the closed position (P1) and for opening the outlet (25) when the rod (34) is in the open position (P2);
a base member (38) that is assembled to a second end (34b) of the rod (34); and
a spring (40) mounted within the body (44) and acting on the base member (38) to bias the rod (34) toward the closed position (P1);
wherein the closure element (30) comprises a surface (30a) that faces the chamber (46) and is subjected to a pressure when a pressurized fluid (B) is supplied through the inlet (28) and into the chamber (46), such that the spring (40) is compressed and the rod (34) is moved from the closed position (P1) to the open position (P2) when a pressure of the pressurized fluid (B) exceeds a predetermined pressure level, thereby allowing the pressurized fluid (B) to be discharged from the outlet (25).

2. The fluid ejection apparatus (20) according to claim 1, wherein the pressurized fluid (B) is not flowing through the inlet (28) and into the chamber (46) when the rod (34) and the closure element (30) reside in the closed position (P1).

3. The fluid ejection apparatus (20) according to claim 1 or 2, further comprising an upper section (24) that provides a flow path (26) between the chamber (46) and the outlet (25).

4. The fluid ejection apparatus (20) according to claim 3, wherein the upper section (24) comprises a plurality of symmetrically dispersed outlet channels (26).

5. The fluid ejection apparatus (20) according to claim 4, wherein each of the outlet channels (26) has an arc-shaped form.

6. The fluid ejection apparatus (20) according to claim 4 or 5, wherein the plurality of outlet channels (60) distribute the fluid (B) around and past the closure element (30) when the rod (34) is in the open position (P2), the plurality of outlet channels (60) being arranged around a hole (27) in the upper section (24) through which the rod (34) extends.

7. The fluid ejection apparatus (20) according to any one of claims 1 - 6, wherein the spring (40) is adapted for allowing the rod (34) and the closure element (30) to move from the closed position (P1) to the open position (P2) when the predetermined pressure level of the fluid (B) within the chamber (46) exceeds twice the atmospheric pressure.

8. The fluid ejection apparatus (20) according to any one of claims 1 - 7, wherein the spring (40) is a constant modulus compression spring.

9. The fluid ejection apparatus (20) according to any one of claims 1 - 8, wherein the closure element (30) is substantially congruent to the outlet (25).

10. The fluid ejection apparatus (20) according to any one of claims 1 - 9, wherein the outlet (25) and the closure element (30) are substantially conical in form.

11. The fluid ejection apparatus (20) according to any one of claims 1 - 10, wherein the closure element (30) comprises a circumferential envelope surface (30a, 30b) that has a gradient that varies relative to the axis (X).

12. The fluid ejection apparatus (20) according to any one of claims 1 - 11, further comprising a seal (32) mounted snugly to the closure element (30) in a position to be pressed into sealing contact with a peripheral wall of the outlet (25) when the pressurized fluid (B) is not flowing through the inlet (28) and into the chamber (46).

13. The fluid ejection apparatus (20) according to any one of claims 1 - 12, further comprising a connector flange (23) adapted for mounting the fluid ejection apparatus (20) to a tank (10) having a mixing agitator (14) operational therewithin.

14. The fluid ejection apparatus (20) according to any one of claims 1 - 13, wherein the fluid ejection apparatus (20) comprises a lower section (50) that is connected to the body (44) by means of threads (52) to form an enclosure in which the base member (38) and spring (40) are located, the spring (40) being arranged to provide a biasing force between the body (44) and the base member (38), the fluid ejection apparatus (20) further comprising an upper section (24) that is attached to the body (44) by means of threads (36), the rod (34) extending through the body (44), the closing element (30) being moveable outwardly in a direction from the upper section (24) to allow a pressurized fluid (B) to be ejected.

15. The fluid ejection apparatus (20*) according to any one of claims 1 - 14, wherein the closure element (30*) comprises a through hole (301) for allowing a part of the pressurized fluid (B) to be discharged from the closure element (30*) when the rod (34) is in the open position.

16. The fluid ejection apparatus (20*) according to claim 15, comprising a plug (241) that seals the through hole (301) when the rod (34) is in the closed position.

17. A mixing tank agitator cleaning system comprising a fluid ejection apparatus (20) according to any one of claims 1 - 16, mounted to a tank (10) with a mixing agitator (14) located within the tank (10), such that the mixing agitator (14) is cleaned when the fluid ejection apparatus (20) ejects a fluid (B).

18. The mixing tank agitator cleaning system according to claim 17, wherein the mixing agitator (14) is cleaned from below when the fluid ejection apparatus (20) ejects a fluid (B).

19. The mixing tank agitator cleaning system according to claim 17 or 18, wherein an axis (X) of the fluid ejection apparatus (20) along which the rod (34) is movable is offset from an axis (Y) around which the mixing tank agitator (14) is rotatable.
